# EUROPÄISCHE PATENTSCHRIFT

(11) **EP 2 792 431 B1**
(45) Veröffentlichungstag und Bekanntmachung des Hinweises auf die Patenterteilung: **29.09.2021**
(21) Anmeldenummer: 14164831.1
(22) Anmeldetag: 16.04.2014
(51) Int. Cl.: B21J 15/14, B23Q 7/05, B64F 5/00, B64F 5/10

(54) **Bearbeitungsanlage für Flugzeugstrukturbauteile**
Machining system for structural components of aircraft
Installation de traitement pour des composants de structure d'avion

(30) Priorität: 16.04.2013 DE 102013006506
(43) Veröffentlichungstag der Anmeldung: 22.10.2014
(73) Patentinhaber: Broetje-Automation GmbH, 26180 Rastede (DE)
(72) Erfinder: Steinhäuser, Carsten, 27283 Verden (DE); Völz, Mathias, 26127 Oldenburg (DE); Neemann, Volker, 26655 Westerstede (DE)
(74) Vertreter: Gottschald, Jan

(56) Entgegenhaltungen:
- EP-A2- 0 956 915
- WO-A2-03/037564
- DE-U1-202008 009 987
- DE-U1-202008 013 438
- FR-A1- 2 861 326
- US-A- 5 806 797
- US-B2- 8 220 134
- None

## Beschreibung

Die Erfindung betrifft eine Bearbeitungsanlage für Flugzeugstrukturbauteile mit den Merkmalen des Anspruchs 1 und ein Verfahren zur Bearbeitung von Flugzeugstrukturbauteilen mit den Merkmalen des Anspruchs 10.

Die automatisierte Herstellung von Flugzeugen und anderen Flugkörpern umfasst als wesentlichen Schritt die Bearbeitung von Rümpfen, Flügeln und anderen großen Flugzeugstrukturbauteilen in ebenfalls entsprechend groß ausgestalteten Fertigungszellen. In solchen Fertigungszellen wird das Flugzeugstrukturbauteil regelmäßig an einem Aufspannrahmen befestigt, welcher dann durch zwei Positioniertürme einer Positioniervorrichtung entlang verschiedener Freiheitsgrade bewegt wird, während an einem Gestell befestigte Werkzeuge wie etwa Nietmaschinen an ausgewählten Punkten des Flugzeugstrukturbauteils die eigentliche Bearbeitung vornehmen.

Eine solche Fertigungszelle oder Bearbeitungsstation als Teil einer Bearbeitungsanlage für Flugzeugstrukturbauteile ist aus der als nächstkommend angesehenen Patentschrift US 8,220,134 B2 bekannt. Die gezeigte Bearbeitungsstation weist einen Aufspannrahmen und eine Nietmaschine auf, welche an einem C-Gestell befestigt ist. Das C-Gestell ist auf einer Schienenanordnung entlang des Aufspannrahmens zwischen den beiden Positioniertürmen verfahrbar.

Problematisch an bekannten Bearbeitungsanlagen ist der Umstand, dass das Auswechseln des Flugzeugstrukturbauteils aus dem Aufspannrahmen aufwändig und langwierig ist und folglich zu einer verhältnismäßig langen Ausfallzeit der Bearbeitungsanlage insgesamt während des Auswechselvorgangs führt. Es muss nämlich nicht nur das soeben an der Bearbeitungsstation fertig bearbeitete Flugzeugstrukturbauteil von dem Aufspannrahmen entfernt werden, sondern auch das nächste, noch zu bearbeitende Flugzeugstrukturbauteil auf dem Aufspannrahmen platziert und befestigt werden. Dabei ist der Aufspannrahmen einer solchen Bearbeitungsstation mit C-Gestell regelmäßig nur von einer Längsseite aus zugänglich, da an den beiden kürzeren Seiten des Aufspannrahmens die Positioniertürme angeordnet sind und sich an der anderen Längsseite des Aufspannrahmens das besagte C-Gestell befindet, welches durch seine umgreifende Form auch die Zugänglichkeit des Aufspannrahmens von oben - etwa durch einen Kran - einschränkt.

Ferner macht das hohe Gewicht ein Heben des Flugzeugstrukturbauteils von dem Aufspannrahmen über weite Entfernungen aufwändig, so dass aus praktischen Erwägungen nur eine Bewegung des Flugzeugstrukturbauteils von dem Aufspannrahmen auf eine bewegliche Transportaufnahme in Frage kommt, welche an die besagte Längsseite heran- und von dort wieder weggefahren wird, zu welchem Zweck wiederum eine Fahrgasse notwendig ist.

Der Auswechselvorgang des Flugzeugstrukturbauteils für die aus dem Stand der Technik bekannte Bearbeitungsstation sieht also vor, nach erfolgter Bearbeitung die - leere - Transportaufnahme über die Fahrgasse an die Längsseite der Bearbeitungsstation heranzufahren, das bearbeitete Flugzeugstrukturbauteil von dem Aufspannrahmen auf die Transportaufnahme zu heben, die Transportaufnahme mit dem bearbeiteten Flugzeugstrukturbauteil wegzufahren, das bearbeitete Flugzeugstrukturbauteil von der Transportaufnahme zu heben, ein unbearbeitetes Flugzeugstrukturbauteil auf die Transportaufnahme zu heben, die Transportaufnahme wieder an die Bearbeitungsstation heranzufahren und dann das unbearbeitete Flugzeugstrukturbauteil von der Transportaufnahme auf den Aufspannrahmen zu heben und dort zu befestigen. Die sich hieraus ergebende beträchtliche Ausfallzeit der Bearbeitungsstation, welche in erheblichem Maße die Kosten für die herzustellenden Flugzeugstrukturbauteile beeinflusst, ist bedeutend.

Die Aufgabe der Erfindung besteht also darin, eine aus dem Stand der Technik bekannte Bearbeitungsanlage für Flugzeugstrukturbauteile und ein bekanntes Verfahren zur Bearbeitung von Flugzeugstrukturbauteilen dahingehend zu verbessern, dass die Ausfallzeiten der Bearbeitungsanlage vor und nach der Bearbeitung verringert werden können.

Diese Aufgabe wird mit den Merkmalen des Anspruchs 1 und mit den Merkmalen des Anspruchs 10 gelöst.

Wesentlich für die Erfindung ist dabei die Erkenntnis, dass sich Möglichkeiten für eine rasche Beladung der Bearbeitungsstation sowie für eine gleichzeitig zur Arbeit in der Bearbeitungsstation erfolgende Vor- oder Nachbearbeitung von Flugzeugstrukturbauteilen ergeben, wenn die Positioniervorrichtung der Bearbeitungsstation selbst das von ihr aufgenommene Flugzeugstrukturbauteil aus dem Arbeitsbereich der Bearbeitungsstation heraus in einen zum Arbeitsbereich beabstandeten Ladebereich bewegen kann. In einem solchen Ladebereich kann dann das bearbeitete Flugzeugstrukturbauteil von dem Aufspannrahmen abgeladen und die Positioniervorrichtung mit einem neuen Flugzeugstrukturbauteil beladen werden. Auf diese Weise entfällt zunächst die Notwendigkeit, das Be- und Entladen in einer Fahrgasse neben dem Arbeitsbereich wie obenstehend beschrieben vornehmen zu müssen, wodurch sich die erforderliche Zeit um Be- oder Entladen wesentlich verkürzt. Zusätzlich ergibt sich die Möglichkeit, eine Vor- und Nachbearbeitung der Flugzeugstrukturbauteile parallel erfolgen zu lassen.

Eine Anordnung von Schienen ist vorgesehen, um die Positioniervorrichtung aus dem Arbeitsbereich in den Ladebereich zu bewegen. Angesichts des Gewichts sowohl des Aufspannrahmens als auch der Positioniertürme stellt eine solche Anordnung von Schienen, hier als Turmschienen bezeichnet, eine geeignete Konstruktion dar, um derartig große Gewichte bewegen zu können.

Die bevorzugte Ausgestaltung gemäß dem Anspruch 7 sieht einen Kran als Ladevorrichtung vor. Dieser bietet erstens die Möglichkeit, das Flugzeugstrukturbauteil zeitweilig nur von dem Kran tragen zu lassen, so dass die Positioniervorrichtung wegbewegt werden kann, bevor das Flugzeugstrukturbauteil wieder abgeladen wird, und zweitens auch die Möglichkeit, das Flugzeugstrukturbauteil über zumindest eine kurze Entfernung von dem Aufnahmerahmen mit dem Kran wegzubewegen. Auf diese Weise kann das Flugzeugstrukturbauteil von dem Kran auch außerhalb des Ladebereichs abgelegt werden.

Alternativ oder zusätzlich hierzu sieht die Ausgestaltung gemäß dem Anspruch 8 steuerbare Verriegelungsmittel an der Positioniervorrichtung als Ladevorrichtung im Sinne des Vorschlags vor. Mit deren Hilfe kann der Aufspannrahmen der Positioniervorrichtung selbst - ohne eine separate Hebevorrichtung - das Flugzeugstrukturbauteil ablegen und aufnehmen.

Die bevorzugte Ausgestaltung des vorschlagsgemäßen Verfahrens nach Anspruch 11 schließlich sieht die gleichzeitige Vorbearbeitung eines weiteren Flugzeugstrukturbauteiles auf einem Ablageplatz während der Bearbeitung des Flugzeugstrukturbauteils in dem Arbeitsbereich der Bearbeitungsstation vor.

In der lediglich ein Ausführungsbeispiel wiedergebenden Zeichnung zeigt
- Fig. 1: eine Schrägansicht einer vorschlagsgemäßen Bearbeitungsanlage für Flugzeugstrukturbauteile mit einem Arbeitsbereich und einem Ladebereich sowie einem Beladekran zum Be- und Entladen der Positioniervorrichtung;
- Fig. 2-5: Draufsichten auf die Bearbeitungsanlage der Fig. 1 in verschiedenen Stadien der Bearbeitung sowie des Be- und Entladens.

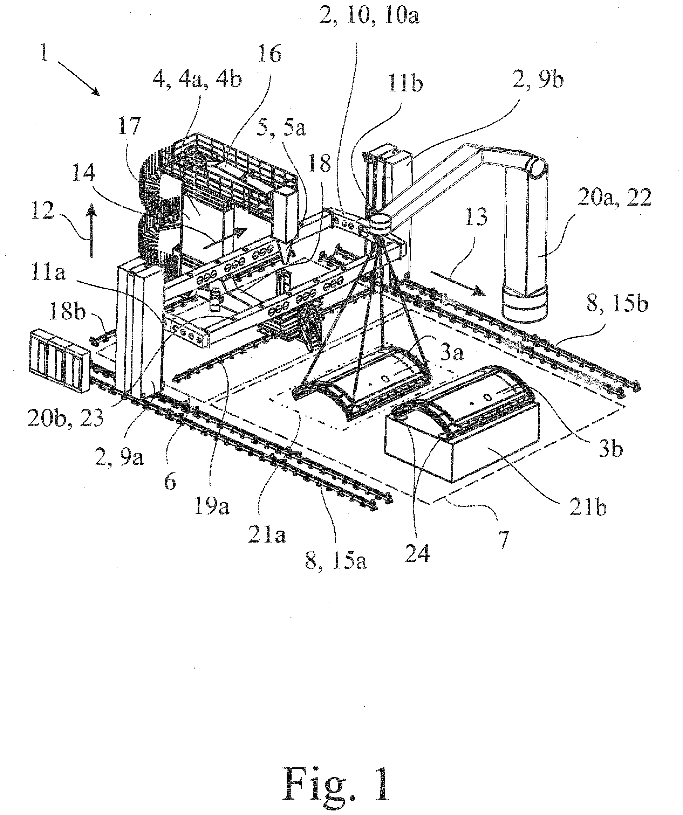

Die in der Fig. 1 dargestellte vorschlagsgemäße Bearbeitungsanlage für Flugzeugstrukturbauteile weist eine Bearbeitungsstation 1 auf, welche eine Positioniervorrichtung 2 zur Aufnahme und Bewegung eines Flugzeugstrukturbauteils 3a,b und einen Manipulator 4 mit einem Werkzeug 5 umfasst.

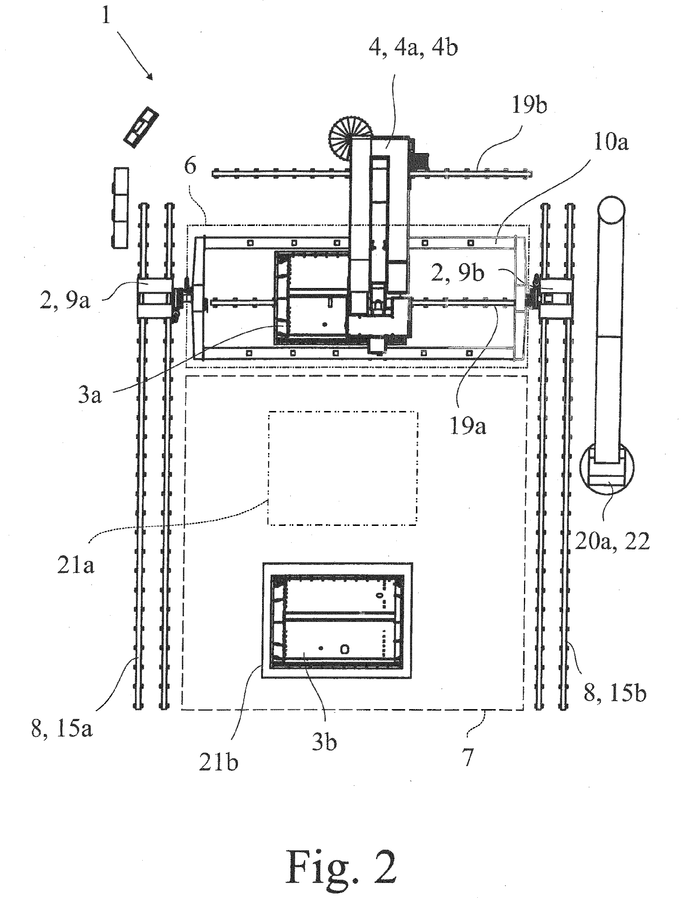

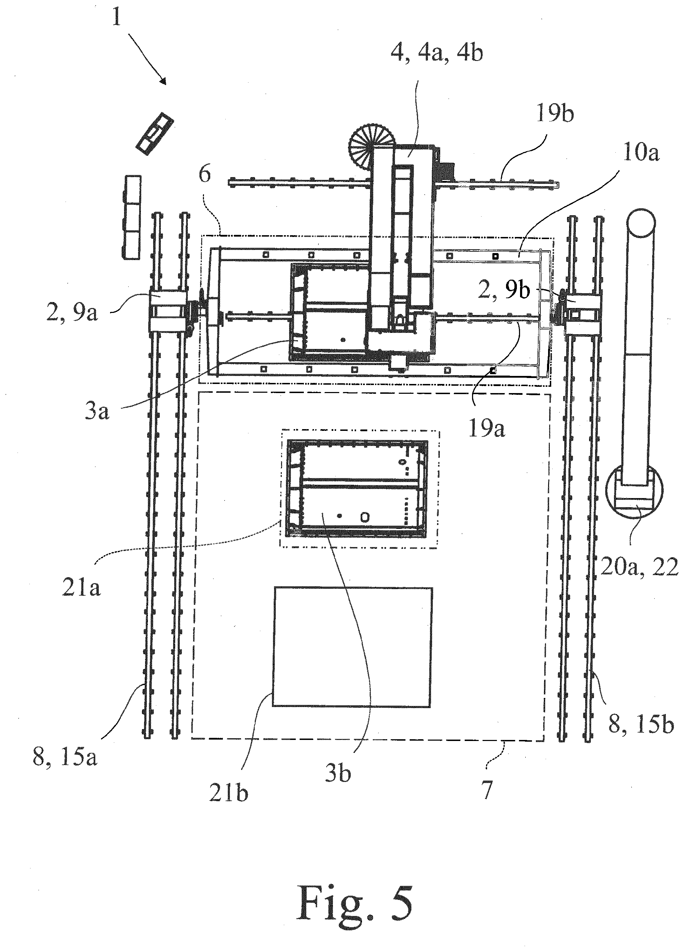

In der Darstellung der Fig. 1 hat die Positioniervorrichtung 2 aktuell kein Flugzeugstrukturbauteil 3a,b aufgenommen, jedoch zeigen die Fig. 2 und 5 die Positioniervorrichtung 2 mit jeweils einem aufgenommenen Flugzeugstrukturbauteil 3a,b in der Bearbeitung.

Bei dem Werkzeug 5 handelt es sich vorliegend und wie bevorzugt um eine Nietmaschine 5a. Der Manipulator 4, welcher vorschlagsgemäß zur Bewegung des Werkzeugs 5 eingerichtet ist, ist vorliegend begrifflich weit und im Sinne der Robotik zu verstehen, also als beweglicher Teil eines grundsätzlich beliebigen Roboteraufbaus. Neben der Nietmaschine 5a können am Manipulator 4 noch weitere gleich- oder andersartige Werkzeuge angeordnet sein.

Die Bewegung des Flugzeugstrukturbauteils 3a,b durch die Positioniervorrichtung 2 im Sinne des Vorschlags kann neben einer Höhenverschiebung des aufgenommenen Flugzeugstrukturbauteils 3a,b auch eine Drehung um ein oder mehrere, vorzugsweise rechtwinklig zueinander verlaufende Achsen umfassen.

Vorschlagsgemäß wird ein Arbeitsbereich 6 der Bearbeitungsstation 1 durch denjenigen Bereich definiert, in welchem das von der Positioniervorrichtung 2 aufgenommene Flugzeugstrukturbauteil 3a,b durch das Werkzeug 5 bearbeitet werden kann. Mit anderen Worten besteht der besagte Arbeitsbereich 6 aus dem Flächenbereich, welcher insbesondere in den Fig. 1 bis 5 dargestellt ist, in oder über welchem eine Bearbeitung des von der Positioniervorrichtung 2 aufgenommenen Flugzeugstrukturbauteils 3a,b durch das Werkzeug 5 möglich ist. Soweit also ein dreidimensionaler Raum durch diejenigen geometrischen Punkte, an denen ein von der Positioniervorrichtung 2 aufgenommenes Flugzeugstrukturbauteil 3a,b durch das Werkzeug 5 - unter Berücksichtigung der Beweglichkeit des Manipulators 4 - bearbeitet werden kann, definiert wird, handelt es sich bei dem Arbeitsbereich 6 im vorliegenden Sinne um die Flächenprojektion dieses dreidimensionalen Raumes auf den Grund. Der Arbeitsbereich 6 wird also wesentlich durch die Flexibilität und Beweglichkeit des Manipulators 4 und des an dem Gestell 4 angeordneten Werkzeugs 5 bestimmt.

Die vorschlagsgemäße Bearbeitungsanlage ist nun dadurch gekennzeichnet, dass sie einen zum Arbeitsbereich 6 beabstandeten Ladebereich 7 zum Be- und/oder Entladen des Flugzeugstrukturbauteils 3a,b umfasst und dass die Bearbeitungsanlage eine Verfahrvorrichtung 8 umfasst, welche dazu eingerichtet ist, ein von der Positioniervorrichtung 2 aufgenommenes Flugzeugstrukturbauteil 3a,b zwischen dem Arbeitsbereich 6 und dem Ladebereich 7 zu bewegen. Insbesondere verlässt bei dieser Bewegung das von der Positioniervorrichtung 2 aufgenommene Flugzeugstrukturbauteil den Arbeitsbereich 6 vollständig und betritt den Ladebereich 7 ebenso vollständig.

Entscheidend ist hierbei, dass das Flugzeugstrukturbauteil 3a,b zwischen dem Arbeitsbereich 6 und dem Ladebereich 7 bewegt wird. Regelmäßig wird es dabei aber so sein, dass auch die Positioniervorrichtung 2 oder zumindest Teile von ihr zwischen dem Arbeitsbereich 6 und dem Ladebereich 7 bewegt werden. Nicht notwendig ist also, dass die gesamte Positioniervorrichtung 2 zu irgendeinem Zeitpunkt vollständig im Arbeitsbereich 6 oder im Ladebereich 7 angeordnet ist. Schon aus der Darstellung der Fig. 1 geht hervor, dass die Positioniervorrichtung 2 sich in der dargestellten Stellung nicht vollständig im Arbeitsbereich 6 befindet.

Der Ladebereich 7 zeichnet sich also dadurch aus, dass er zum Arbeitsbereich 6 beabstandet und damit disjunkt ist und dass die Positioniervorrichtung 2 bzw. das von der Positioniervorrichtung 2 aufgenommene Flugzeugstrukturbauteil 3a,b entladen werden kann, wenn sich das Flugzeugstrukturbauteil 3a,b auf der Positioniervorrichtung 2 in diesem Ladebereich 7 befindet. Auch bei dem Ladebereich 7 handelt es sich um eine Fläche im selben Sinne wie für den Arbeitsbereich 6 beschrieben.

Die Positioniervorrichtung 2 umfasst zwei Positioniertürme 9a,b mit einem zwischen den Positioniertürmen 9a,b angeordneten Bauteilträger 10 zur Aufnahme des Flugzeugstrukturbauteils 3a,b. Bevorzugt ist der Bauteilträger 10 rechteckig ausgestaltet, wobei es sich insbesondere um einen Aufspannrahmen 10a, wie ebenfalls in der Zeichnung dargestellt, handeln kann.

Hierauf aufbauend ist weiter bevorzugt vorgesehen, dass die Positioniertürme 9a,b jeweils eine Befestigungsvorrichtung 1 1a,b für den Bauteilträger 10 aufweisen, wobei die jeweilige Befestigungsvorrichtung 11a,b in einer Höhenrichtung 12 an dem jeweiligen Positionierturm 9a,b verfahrbar ist. Unter einer Befestigungsvorrichtung 11a,b ist also derjenige Teil der Positioniervorrichtung 2 zu verstehen, welcher die Verbindung zwischen dem Bauteilträger 10 und den Positioniertürmen 9a,b herstellt sowie die Drehung des Bauteilträgers 10 um die durch die Befestigungsvorrichtungen 11a,b definierte Achse ermöglicht. Im Grunde kann es sich bei den Befestigungsvorrichtungen 11a,b um jeweils eine Welle mit einem Drehantrieb handeln.

Durch ein Verfahren der Befestigungsvorrichtungen 11a,b auf eine jeweils unterschiedliche Höhe in der besagten Höhenrichtung 12 wird insbesondere ein Kippen des Aufspannrahmens 10a in der durch die Positioniertürme 9a,b definierten Ebene ermöglicht. Zu den Befestigungsvorrichtungen 11a,b im Sinne dieser Ausführungsform gehört auch diejenige Mechanik der Positioniertürme 9a,b, welche den Abstandsausgleich zwischen den beiden Positioniertürmen 9a,b bei einem derartigen Kippen des Aufspannrahmens 10a gewährleistet.

Die Bewegung des Flugzeugstrukturbauteils 3a,b in den Ladebereich 7 ist dann besonders einfach möglich, wenn, wie bevorzugt, der Ladebereich 7 in einer - hier und nachfolgend als Y-Richtung 13 bezeichneten - Richtung zum Arbeitsbereich 6 versetzt angeordnet ist, welche Y-Richtung 13 im Wesentlichen orthogonal zu der zwischen den Positioniertürmen 9a,b verlaufenden Richtung - hier und nachfolgend als X-Richtung 14 bezeichnet - ausgerichtet ist. Das Flugzeugstrukturbauteil 3a,b kann dann durch eine, bezogen auf die Positioniertürme, "seitliche" Bewegung in den Ladebereich 7 gebracht werden.

Eine solche Bewegung wird dadurch ermöglicht, dass die Verfahrvorrichtung 8 eine erste Turmschiene 15a und eine zweite Turmschiene 15b umfasst, welche dazu eingerichtet sind, die Positioniervorrichtung 2 und insbesondere die Positioniertürme 9a,b in Y-Richtung 13 zwischen dem Arbeitsbereich 6 und dem Ladebereich 7 zu bewegen. Die Verfahrvorrichtung 8 ist also dazu eingerichtet, die Positioniertürme 9a,b auf ihren Turmschienen 15a,b zu verfahren, wozu die Verfahrvorrichtung 8 auch einen entsprechenden Antrieb umfassen kann.

Dabei ergeben sich weiter besondere Vorteile, wenn der Arbeitsbereich 6 und der Ladebereich 7, wie in den Fig. 1 sowie 2a-d dargestellt, jeweils zumindest teilweise zwischen der ersten Turmschiene 15a und der zweiten Turmschiene 15b angeordnet ist.

Die vorschlagsgemäße Bearbeitungsanlage ist besonders dann vorteilhaft, wenn in der Bearbeitungsstation 1 die Zugänglichkeit des von der Positioniervorrichtung 2 aufgenommenen Flugzeugstrukturbauteils 3a,b von oben eingeschränkt ist. Das ist dann der Fall, wenn gemäß der bevorzugten, in den Fig. 1 bis 5 gezeigten Ausführungsform der Manipulator 4 ein Gestell 4a mit einem oberen Horizontalträger 16 umfasst, welcher obere Horizontalträger 16 zumindest teilweise oberhalb des Arbeitsbereichs 6 angeordnet ist. Das dadurch im Arbeitsbereich 6 gebildete Hindernis wird durch die vorschlagsgemäße Bewegung des Bauteilträgers 10 in den Ladebereich 7 umgangen.

In einer Weiterentwicklung ist bevorzugt vorgesehen, dass das Gestell 4a ein C-Gestell 4b ist mit - neben dem bereits erwähnten oberen Horizontalträger 16 - einer Säule 17 und einem unteren Horizontalträger 14. Ein solches C-Gestell 4b bietet einerseits eine gute Tragfähigkeit, insbesondere für ein schweres Werkzeug 5 und gleichzeitig eine gute Beweglichkeit zum Erreichen eines möglichst großen Arbeitsbereichs 6. Dieser Arbeitsbereich 6 kann besonders dann eine gewünschte Ausdehnung erreichen, wenn die Bearbeitungsanlage Gestellschienen 19a,b umfasst, welche dazu eingerichtet sind, das C-Gestell 4b in der X-Richtung 14 zu bewegen, also zwischen den Positioniertürmen 9a,b. Entsprechend weist das C-Gestell 4b bevorzugt einen Antrieb für diese Bewegung auf den Gestellschienen 19a,b auf.

Zur optimalen Bearbeitbarkeit kann das Werkzeug 5, wie dargestellt, an dem oberen Horizontalträger 16 befestigt sein.

Eine vorteilhafte weitere Ausgestaltung sieht vor, dass die Gestellschienen 19a,b eine erste Gestellschiene 19a und eine zweite Gestellschiene 19b umfassen, wobei der untere Horizontalträger 18 in Y-Richtung 13 ausgerichtet ist und sowohl auf der ersten Gestellschiene 19a als auch auf der zweiten Gestellschiene 19b angeordnet ist, wobei die erste Gestellschiene 19a, vorzugsweise mittig, in X-Richtung 14 durch den Arbeitsbereich 6 verläuft und die zweite Gestellschiene 19b beabstandet zu dem Arbeitsbereich 6 verläuft. Durch den Abstand zum Arbeitsbereich 6 bedingt verläuft die zweite Gestellschiene 19b also außerhalb des Arbeitsbereichs 6.

Vorschlagsgemäß und wie besonders in der Fig. 1 dargestellt umfasst die Bearbeitungsanlage eine Ladevorrichtung 20a,b, welche dazu eingerichtet ist, das Flugzeugstrukturbauteil 3a,b von der Positioniervorrichtung 2 auf einen Ablageplatz 21a,b zu bewegen und dazu eingerichtet ist, das Flugzeugstrukturbauteil 3a,b von dem Ablageplatz 21a,b auf die Positioniervorrichtung 2 zu bewegen.

Bei einem solchen Ablageplatz 21b kann es sich einerseits um eine dedizierte Struktur oder Vorrichtung handeln, wie für den rechts in der Fig. 1 dargestellten Ablageplatz 21b angedeutet. Gleichermaßen kann es sich bei einem solchen Ablageplatz 21a aber auch lediglich um eine hierfür vorgesehene, einfache Bodenfläche handeln, wie es etwa für den links in der Fig. 1 gezeigten Ablageplatz 211 gilt.

Hier ist der Ablageplatz 21a,b im Ladebereich 7 selbst angeordnet. Mit anderen Worten wird das Flugzeugstrukturbauteil 3a,b in so einem Fall nicht nur von der Positioniervorrichtung 2 entfernt, wenn es sich mit der Positioniervorrichtung 2 im Ladebereich 7 befindet, sondern verbleibt zunächst auch nach dem Entfernen von der Positioniervorrichtung 2 im Ladebereich 7.

Ferner ist vorgesehen, dass der Ladebereich 7 einen weiteren Ablageplatz 21b umfasst, wobei hier- wie auch in den Fig. 1 bis 5 wiedergegeben - der Ablageplatz 21a und der weitere Ablageplatz 21b in Y-Richtung 13 zueinander versetzt angeordnet sind.

Bevorzugt ist weiter, dass die Ladevorrichtung 20a,b einen Kran 22 umfasst. Dieser ist dazu eingerichtet, ein Flugzeugstrukturbauteil 3a,b anzuheben und somit zwischen der Positioniervorrichtung 2 und einem Ablageplatz 21a,b zu bewegen. In einem Zwischenschritt kann der Kran 22 das Flugzeugstrukturbauteil 3a,b selbst tragen oder auf einer - nicht gezeigten - Zwischenablage ablegen. Das kann etwa dann sinnvoll sein, wenn das Flugzeugstrukturbauteil 3a,b auf einen Ablageplatz 21a,b gelegt werden soll, welcher sich unterhalb der aktuellen Position des Aufspannrahmens 10a im Ladebereich 7 befindet. In so einem Fall kann der Kran 22 das Flugzeugstrukturbauteil 3a,b aufheben und warten, bis sich der Aufspannrahmen 10a so bewegt hat, dass der vormals für den Kran 22 unzugängliche Ablageplatz 21a,b wieder erreicht und das Flugzeugstrukturbauteil 3a,b auf ihm abgelegt werden kann.

Alternativ oder zusätzlich kann die Ladevorrichtung 20b steuerbare Verriegelungsmittel 23 an der Positioniervorrichtung 2 und hier insbesondere an dem Aufspannrahmen 10a umfassen. Mit diesen kann der Be- oder Entladevorgang des Flugzeugstrukturbauteils 3a,b auf einen im Ladebereich 7 befindlichen Ablageplatz 21a,b so vorgenommen werden, dass etwa der Aufspannrahmen 10a so positioniert wird, dass das auf ihm befestigte Flugzeugstrukturbauteil 3a,b von dem betreffenden Ablageplatz 21a,b schon in einer für das Ablegen geeigneten Weise aufgenommen wird, indem etwa das Flugzeugstrukturbauteil 3a,b auf der entsprechenden Oberfläche des Ablageplatzes 21a,b schon anliegt. Es müssen dann nur noch die steuerbaren Verriegelungsmittel 23 gelöst werden. Durch solche steuerbaren Verriegelungsmittel 23 entfällt die Notwendigkeit, eine Zugänglichkeit des Ladebereichs 7 von oben für den bereits genannten Kran 22 für das Be- oder Entladen vorsehen zu müssen.

Der umgekehrte Prozess zum Beladen könnte dann entsprechend umfassen, den Aufspannrahmen 10a so zu positionieren, dass das von dem - wiederum im Beladebereich 7 befindlichen - Ablageplatz 21a,b aufgenommene Flugzeugstrukturbauteil 3a,b durch ein Verriegeln der steuerbaren Verriegelungsmittel 23 an dem Aufspannrahmen 10a befestigt wird und durch ein Wegbewegen des Aufspannrahmens 10a von dem Ablageplatz 21a,b ebenfalls wegbewegt wird. Insgesamt erlauben die steuerbaren Verriegelungsmittel 23 auf diese Weise einen raschen Ent- und Beladevorgang.

Solche steuerbaren Verriegelungsmittel 23 können auch in Kombination mit einem Kran 22 vorgesehen und gemeinsam verwendet werden.

Neben einer vertikalen Beladung durch den Kran 22 wie beschrieben - also von oben - oder durch eine andere Ladevorrichtung 20a,b kommt auch eine horizontale und also seitliche Beladung durch eine geeignete Ladevorrichtung 20a,b in Frage.

Analog zu den steuerbaren Verriegelungsmitteln 23 der Positioniervorrichtung 2 ist bevorzugt vorgesehen, dass der Ablageplatz 21a,b Befestigungsmittel 24 zur Aufnahme des Flugzeugstrukturbauteils 3a,b aufweist. Diese Befestigungsmittel 24 können ebenfalls steuerbar sein und in ihrer Funktionsweise den steuerbaren Verriegelungsmitteln 23 entsprechen.

Alternativ oder zusätzlich zu dieser Ausgestaltung mit Befestigungsmitteln 24 kann der Ablageplatz 21a,b für eine Nach- oder Vorbearbeitung des Flugzeugstrukturbauteils 3a,b eingerichtet sein. Dabei ist mit einer Nach- oder Vorbearbeitung jedwede Bearbeitung - ob nun manuell erfolgend, automatisch oder gar durch einen hier nicht gezeigten weiteren Manipulator - des Flugzeugstrukturbauteils 3a,b gemeint, welche nicht im Arbeitsbereich 6 der Bearbeitungsstation 1 erfolgt, unabhängig davon, ob dies nun zeitlich vor oder nach einer solchen Bearbeitung im Arbeitsbereich 6 geschieht. Wenn der Ablageplatz 21a,b sich außerhalb des Ladebereichs 7 befindet, so kann die entsprechende Nach- oder Vorbearbeitung entsprechend auch außerhalb des Ladebereichs 7 vorgesehen sein.

Das vorschlagsgemäße Verfahren wird nun insbesondere mit Bezug zu den Fig. 2 bis 5 vorgestellt, welche das Verfahren ausgeführt von der Bearbeitungsanlage der Fig. 1 in einer Draufsicht wiedergeben.

Das vorschlagsgemäße Verfahren zur Bearbeitung von Flugzeugstrukturbautei-len umfasst das Bearbeiten eines von der Positioniervorrichtung 2 aufgenommenen Flugzeugstrukturbauteils 3a in dem Arbeitsbereich 6 durch das an dem Manipulator 4 angeordnete Werkzeug 5. Dieser Verfahrensschritt geht insbesondere aus der Fig. 2 hervor.

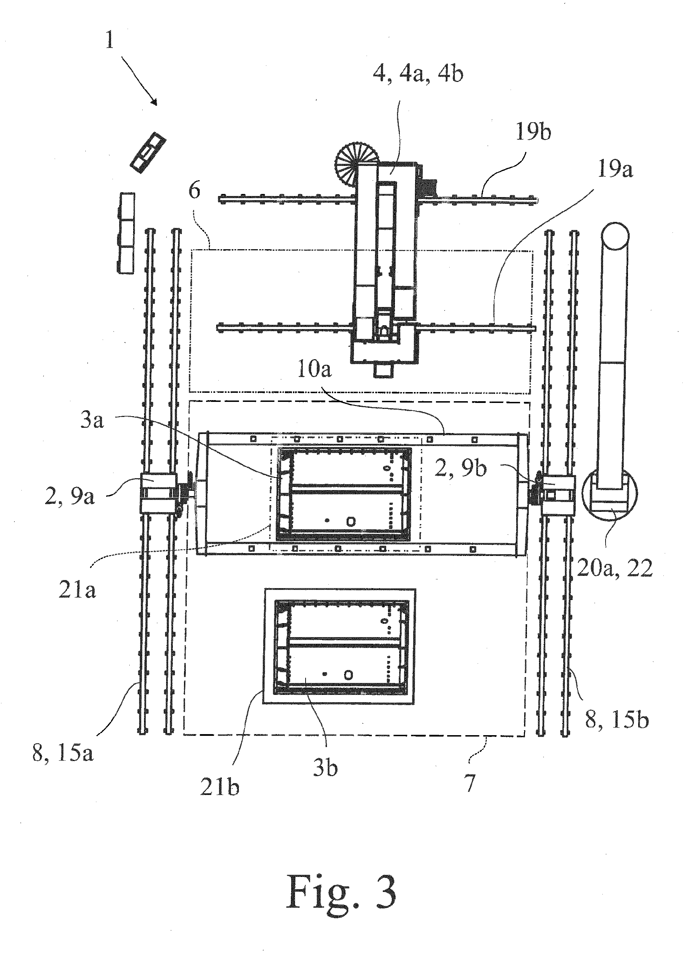

Das Verfahren ist dadurch gekennzeichnet, dass es das Bewegen des Flugzeugstrukturbauteils 3a mittels der Positioniervorrichtung 2 aus dem Arbeitsbereich 6 in einem zum Arbeitsbereich 6 beabstandeten Ladebereich 7 umfasst. Die Fig. 3 zeigt die Bearbeitungsanlage nach Abschluss dieses Verfahrensschritts.

Ferner ist das Verfahren dadurch gekennzeichnet, dass es das Entladen des Flugzeugstrukturbauteils 3a von der Positioniervorrichtung 2 auf einen Ablageplatz 2 1a, welcher außerhalb des Arbeitsbereich 6 angeordnet ist, umfasst. Dabei kann das Entladen auf grundsätzlich beliebige Art und Weise erfolgen, wobei die bereits beschriebenen Ausgestaltungen unter Verwendung eines Krans 22 oder von steuerbaren Verriegelungsmitteln 23 jeweils als Bestandteil einer Ladevorrichtung 20a,b besonders bevorzugt sind.

Weiter umfasst das Verfahren das Laden eines weiteren Flugzeugstrukturbauteils 3b von einem weiteren Ablageplatz 21b, welcher außerhalb des Arbeitsbereichs 6 angeordnet ist, auf die Positioniervorrichtung 2.

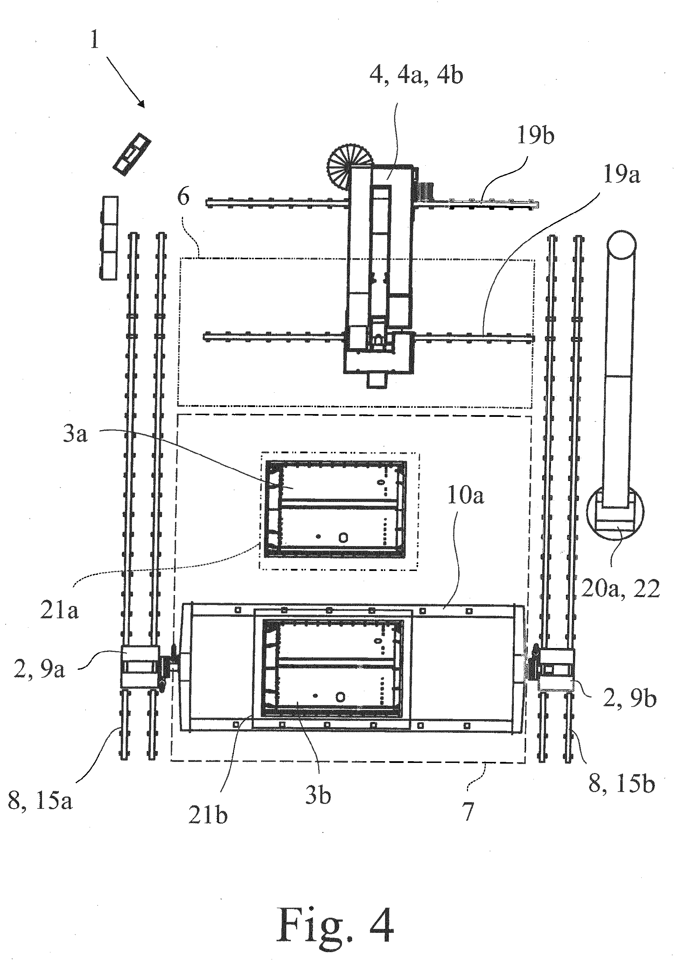

Die Fig. 4 zeigt nun die Bearbeitungsanlage nach Abschluss dieses Verfahrensschritts. Aus der Fig. 4 geht ebenso hervor, dass der Ablageplatz 21a und alternativ oder zusätzlich auch der weitere Ablageplatz 21b im Ladebereich 7 angeordnet ist. Das Entladen des Flugzeugstrukturbauteils 3a von der Positioniervorrichtung 2 auf den Ablageplatz 21a erfolgte nun entweder so, dass das Flugzeugstrukturbauteil 3a von dem - in der Fig. 4 nicht dargestellten - Kran 22 aufgehoben wurde und erst auf den Ablageplatz 21a abgelegt wurde, nachdem sich der Aufspannrahmen 10a der Positioniervorrichtung 2 so bewegt hat, dass der Ablageplatz 21a zugänglich wurde oder so, dass das Flugzeugstrukturbauteil 3a durch steuerbare Verriegelungsmittel 23 direkt von dem Ablageplatz 21a aufgenommen wurde.

In entsprechender Weise mit den beiden bevorzugten Möglichkeiten erfolgte das Laden des weiteren Flugzeugstrukturbauteils 3b von dem weiteren Ablageplatz 21b auf die Positioniervorrichtung 2. So könnte der Kran 22 das weitere Flugzeugstrukturbauteil 3b von dem weiteren Ablageplatz 21b aufgenommen haben, bevor der Aufspannrahmen 10a die in der Fig. 4 dargestellte Position erreicht hat und erst nach Erreichen dieser Position das weitere Flugzeugstrukturbauteil 3b auf den Aufspannrahmen 10a gelegt haben.

Schließlich umfasst das vorschlagsgemäße Verfahren das Bewegen des zweiten Flugzeugstrukturbauteils 3b mittels der Positioniervorrichtung 2 in den Arbeitsbereich 6 und das Bearbeiten des zweiten Flugzeugstrukturbauteils 3b durch das an dem Manipulator 4 angeordnete Werkzeug 5, was wiederum in der Fig. 5 wiedergegeben ist.

In einer bevorzugten Weiterbildung des vorschlagsgemäßen Verfahrens ist vorgesehen, dass während des Bearbeitens des Flugzeugstrukturbauteils 3a in dem Arbeitsbereich 6 ein gleichzeitiges Vorbearbeiten des weiteren Flugzeugstrukturbauteils 3b auf dem weiteren Ablageplatz 21b erfolgt.

Alternativ oder zusätzlich kann vorgesehen sein, dass während des Bearbeitens des weiteren Flugzeugstrukturbauteils 3b in dem Arbeitsbereich 6 ein gleichzeitiges Nachbearbeiten des Flugzeugstrukturbauteils 3a auf dem Ablageplatz 21a erfolgt.

Weitere bevorzugte Ausgestaltungen des vorschlagsgemäßen Verfahrens ergeben sich aus den bevorzugten Ausgestaltungen der vorschlagsgemäßen Bearbeitungsanlage.

## Patentansprüche

1. Bearbeitungsanlage für Flugzeugstrukturbauteile mit einer Bearbeitungsstation (1), welche eine Positioniervorrichtung (2) zur Aufnahme und Bewegung eines Flugzeugstrukturbauteils (3a,b) und einen Manipulator (4) mit einem Werkzeug (5), vorzugsweise einer Nietmaschine (5a), umfasst, wobei der Manipulator (4) zur Bewegung des Werkzeugs (5) eingerichtet ist, wobei ein Arbeitsbereich (6) der Bearbeitungsstation (1) durch denjenigen Bereich definiert wird, in welchem das von der Positioniervorrichtung (2) aufgenommene Flugzeugstrukturbauteil (3a,b) durch das Werkzeug (5) bearbeitet werden kann und wobei die Positioniervorrichtung (2) zwei Positioniertürme (9a,b) mit einem zwischen den Positioniertürmen (9a,b) angeordneten, vorzugsweise rechteckigen, Bauteilträger (10), insbesondere einem Aufspannrahmen (10a), zur Aufnahme des Flugzeugstrukturbauteils (3a,b) umfasst,
wobei die Bearbeitungsanlage einen zum Arbeitsbereich (6) beabstandeten Ladebereich (7) zum Be- und/oder Entladen des Flugzeugstrukturbauteil (3a,b) umfasst und dass die Bearbeitungsanlage eine Verfahrvorrichtung (8) umfasst, die dazu eingerichtet ist, ein von der Positioniervorrichtung (2) aufgenommenes Flugzeugstrukturbauteil (3a,b), insbesondere vollständig, zwischen dem Arbeitsbereich (6) und dem Ladebereich (7) zu bewegen,
wobei der Ladebereich (7) in einer Richtung - Y-Richtung (13) - zum Arbeitsbereich (6) versetzt angeordnet ist, welche Y-Richtung (13) im Wesentlichen orthogonal zu der zwischen den Positioniertürmen (9a, b) verlaufenden Richtung - X-Richtung (14) - ausgerichtet ist,
wobei die Verfahrvorrichtung (8) eine erste Turmschiene (15a) und eine zweite Turmschiene (15b) umfasst, welche dazu eingerichtet sind, die Positioniertürme (9a,b) in Y-Richtung (13) zwischen dem Arbeitsbereich (6) und dem Ladebereich (7) zu bewegen,
wobei die Bearbeitungsanlage eine Ladevorrichtung (20a,b) umfasst, welche dazu eingerichtet ist, das Flugzeugstrukturbauteil (3a,b) von der Positioniervorrichtung (2) auf einen Ablageplatz (21a,b) zu bewegen und/oder dazu eingerichtet ist, das Flugzeugstrukturbauteil (3a,b) von dem Ablageplatz (21a,b) auf die Positioniervorrichtung (2) zu bewegen und
wobei der Ablageplatz (21a,b) im Ladebereich (7) angeordnet ist und der Ladebereich (7) einen weiteren Ablageplatz (21b) aufweist, wobei der Ablageplatz (21a) und der weitere Ablageplatz (21b) in Y-Richtung (13) zueinander versetzt und zwischen der ersten Turmschiene (15a) und der zweiten Turmschiene (15b) angeordnet sind.

2. Bearbeitungsanlage nach Anspruch 1, **dadurch gekennzeichnet, dass** die Positioniertürme (9a,b) jeweils eine Befestigungsvorrichtung (11a,b) für den Bauteilträger (10) aufweisen, wobei die jeweilige Befestigungsvorrichtung (11a,b) in einer Höhenrichtung (12) an dem jeweiligen Positionierturm (9a,b) verfahrbar ist.

3. Bearbeitungsanlage nach Anspruch 1 oder 2, **dadurch gekennzeichnet, dass** der Arbeitsbereich (6) und der Ladebereich (7) jeweils zumindest teilweise zwischen der ersten Turmschiene (15a) und der zweiten Turmschiene (15b) angeordnet ist.

4. Bearbeitungsanlage nach Anspruch 3, **dadurch gekennzeichnet, dass** der Manipulator (4) ein Gestell (4a) mit einem oberen Horizontalträger (16) umfasst, welcher obere Horizontalträger (16) zumindest teilweise oberhalb des Arbeitsbereichs (6) angeordnet ist, vorzugsweise, wobei das Gestell (4a) ein C-Gestell (4b) ist mit einer Säule (17) und einem unteren Horizontalträger (18) ist, insbesondere, wobei die Bearbeitungsanlage Gestellschienen (19a,b) umfasst, welche dazu eingerichtet sind, das C-Gestell (4b) in X-Richtung (14) zu bewegen.

5. Bearbeitungsanlage nach Anspruch 4, **dadurch gekennzeichnet, dass** das Werkzeug (5) an dem oberen Horizontalträger (16) befestigt ist.

6. Bearbeitungsanlage nach Anspruch 4 oder 5, **dadurch gekennzeichnet, dass** die Gestellschienen (19a,b) eine erste Gestellschiene (19a) und eine zweite Gestellschiene (19b) umfassen, wobei der untere Horizontalträger (18) in Y-Richtung (13) ausgerichtet und sowohl auf der ersten Gestellschiene (16a) als auch auf der zweiten Gestellschiene (16b) angeordnet ist, wobei die erste Gestellschiene (19a), vorzugsweise mittig, in X-Richtung (14) durch den Arbeitsbereich (6) verläuft und die zweite Gestellschiene (19b) beabstandet zu dem Arbeitsbereich (6) verläuft.

7. Bearbeitungsanlage nach einem der Ansprüche 1 bis 6, **dadurch gekennzeichnet, dass** die Ladevorrichtung (20a,b) einen Kran (22) umfasst.

8. Bearbeitungsanlage nach einem der Ansprüche 1 bis 7, **dadurch gekennzeichnet, dass** die Ladevorrichtung (20b) steuerbare Verriegelungsmittel (23) an der Positioniervorrichtung (2), insbesondere an dem Aufspannrahmen (10a) umfasst.

9. Bearbeitungsanlage nach einem der Ansprüche einem der Ansprüche 1 bis 8, **dadurch gekennzeichnet, dass** der Ablageplatz (21a,b) Befestigungsmittel (24) zur Aufnahme des Flugzeugstrukturbauteils (3a,b) aufweist und/oder dass der Ablageplatz (21a,b) für eine Nach- oder Vorbearbeitung des Flugzeugstrukturbauteils (3a,b) eingerichtet ist.

10. Verfahren zur Bearbeitung von Flugzeugstrukturbauteilen, umfassend:
- Bearbeiten eines von einer Positioniervorrichtung (2) aufgenommenen Flugzeugstrukturbauteils (3a) in einem Arbeitsbereich (6) durch ein an einem Manipulator (4) angeordnetem Werkzeug (5),
wobei die Positioniervorrichtung (2) zwei Positioniertürme (9a,b) mit einem zwischen den Positioniertürmen (9a,b) angeordneten, vorzugsweise rechteckigen, Bauteilträger (10), insbesondere einem Aufspannrahmen (10a), zur Aufnahme des Flugzeugstrukturbauteils (3a,b) umfasst, wobei eine erste Turmschiene (15a) und eine zweite Turmschiene (15b) vorgesehen ist, um die Positioniertürme (9a,b) in einer Y-Richtung (13) zwischen dem Arbeitsbereich (6) und einem Ladebereich (7) zu bewegen,
wobei der Ladebereich (7) in Y-Richtung (13) zum Arbeitsbereich (6) versetzt angeordnet ist, welche Y-Richtung (13) im Wesentlichen orthogonal zu der zwischen den Positioniertürmen (9a, b) verlaufenden Richtung - X-Richtung (14) - ausgerichtet ist,
wobei das Verfahren weiter umfasst:
- Bewegen des Flugzeugstrukturbauteils (3a) mittels der Positioniervorrichtung (2) aus dem Arbeitsbereich (6) in den zum Arbeitsbereich (6) beabstandeten Ladebereich (7);
- Entladen des Flugzeugstrukturbauteils (3a) von der Positioniervorrichtung (2) auf einen Ablageplatz (21a), welcher außerhalb des Arbeitsbereichs (6) und im Ladebereich (7) angeordnet ist;
- Laden eines weiteren Flugzeugstrukturbauteils (3b) von einem weiteren Ablageplatz (21b), welcher außerhalb des Arbeitsbereichs (6) und im Ladebereich (7) angeordnet ist, auf die Positioniervorrichtung (2), wobei der Ablageplatz (21a) und der weitere Ablageplatz (21b) in Y-Richtung (13) zueinander versetzt und zwischen der ersten Turmschiene (15a) und der zweiten Turmschiene (15b) angeordnet sind;
- Bewegen des zweiten Flugzeugstrukturbauteils (3b) mittels der Positioniervorrichtung (2) in den Arbeitsbereich (6) und
- Bearbeiten des zweiten Flugzeugstrukturbauteils (3b) durch das an dem Manipulator (4) angeordnete Werkzeug (5).

11. Verfahren nach Anspruch 10, **dadurch gekennzeichnet, dass** während des Bearbeitens des Flugzeugstrukturbauteils (3a) in dem Arbeitsbereich (6) ein gleichzeitiges Vorbearbeiten des weiteren Flugzeugstrukturbauteils (3b) auf dem weiteren Ablageplatz (21b) erfolgt.

## Claims

1. Processing installation for aircraft structural components, having a processing station (1) which comprises a positioning apparatus (2) for receiving and moving an aircraft structural component (3a, b), and a manipulator (4) having a tool (5), preferably a riveting machine (5a), wherein the manipulator (4) is designed to move the tool (5), wherein a working region (6) of the processing station (1) is defined by that region in which the aircraft structural component (3a, b) received by the positioning apparatus (2) can be processed by the tool (5), and wherein the positioning apparatus (2) comprises two positioning towers (9a, b) having a, preferably rectangular, component carrier (10), in particular a clamping frame (10a), which is arranged between the positioning towers (9a, b) and intended for receiving the aircraft structural component (3a, b),
wherein the processing installation comprises a loading region (7) spaced apart from the working region (6) and intended for loading and/or unloading the aircraft structural component (3a, b), and wherein the processing installation comprises a movement apparatus (8) which is designed to move, in particular completely, an aircraft structural component (3a, b), which is received by the positioning apparatus (2), between the working region (6) and the loading region (7),
wherein the loading region (7) is arranged in a direction - Y direction (13) - so as to be offset with respect to the working region (6), which Y direction (13) is oriented substantially orthogonally to the direction - X direction (14) - running between the positioning towers (9a, b),
wherein the movement apparatus (8) comprises a first tower rail (15a) and a second tower rail (15b) which are designed to move the positioning towers (9a, b) in the Y direction (13) between the working region (6) and the loading region (7),
wherein the processing installation comprises a loading apparatus (20a, b) which is designed to move the aircraft structural component (3a, b) from the positioning apparatus (2) to a parking place (21a, b) and/or is designed to move the aircraft structural component (3a, b) from the parking place (21a, b) to the positioning apparatus (2), and
wherein the parking place (21a, b) is arranged in the loading region (7), and the loading region (7) has a further parking place (21b), wherein the parking place (21a) and the further parking place (21b) are offset with respect to one another in the Y direction (13) and are arranged between the first tower rail (15a) and the second tower rail (15b).

2. Processing installation according to Claim 1, **characterized in that** the positioning towers (9a, b) each have a fastening apparatus (11a, b) for the component carrier (10), wherein the respective fastening apparatus (11a, b) is movable on the respective positioning tower (9a, b) in a vertical direction (12).

3. Processing installation according to Claim 1 or 2, **characterized in that** the working region (6) and the loading region (7) are in each case arranged at least partially between the first tower rail (15a) and the second tower rail (15b).

4. Processing installation according to Claim 3, **characterized in that** the manipulator (4) comprises a framework (4a) having an upper horizontal member (16), which upper horizontal member (16) is arranged at least partially above the working region (6), preferably wherein the framework (4a) is a C framework (4b) with a column (17) and a lower horizontal member (18), in particular wherein the processing installation comprises framework rails (19a, b) which are designed to move the C framework (4b) in the X direction (14).

5. Processing installation according to Claim 4, **characterized in that** the tool (5) is fastened to the upper horizontal member (16).

6. Processing installation according to Claim 4 or 5, **characterized in that** the framework rails (19a, b) comprise a first framework rail (19a) and a second framework rail (19b), wherein the lower horizontal member (18) is oriented in the Y direction (13) and is arranged both on the first framework rail (16a) and on the second framework rail (16b), wherein the first framework rail (19a) runs, preferably centrally, in the X direction (14) through the working region (6), and the second framework rail (19b) runs at a distance from the working region (6) .

7. Processing installation according to one of Claims 1 to 6, **characterized in that** the loading apparatus (20a, b) comprises a crane (22).

8. Processing installation according to one of Claims 1 to 7, **characterized in that** the loading apparatus (20b) comprises controllable locking means (23) on the positioning apparatus (2), in particular on the clamping frame (10a).

9. Processing installation according to one of Claims 1 to 8, **characterized in that** the parking place (21a, b) has fastening means (24) for receiving the aircraft structural component (3a, b) and/or **in that** the parking place (21a, b) is designed for post- or preprocessing of the aircraft structural component (3a, b).

10. Method for processing aircraft structural components, comprising:
- processing an aircraft structural component (3a), which is received by a positioning apparatus (2), in a working region (6) by means of a tool (5) arranged on a manipulator (4),
wherein the positioning apparatus (2) comprises two positioning towers (9a, b) having a, preferably rectangular, component carrier (10), in particular a clamping frame (10a), which is arranged between the positioning towers (9a, b) and intended for receiving the aircraft structural component (3a, b), wherein a first tower rail (15a) and a second tower rail (15b) are provided in order to move the positioning towers (9a, 9b) in a Y direction (13) between the working region (6) and a loading region (7),
wherein the loading region (7) is arranged in the Y direction (13) so as to be offset with respect to the working region (6), which Y direction (13) is oriented substantially orthogonally to the direction - X direction (14) - running between the positioning towers (9a, b),
wherein the method further comprises:
- moving the aircraft structural component (3a) by means of the positioning apparatus (2) from the working region (6) into the loading region (7) spaced apart from the working region (6);
- unloading the aircraft structural component (3a) from the positioning apparatus (2) onto a parking place (21a) which is arranged outside the working region (6) and in the loading region (7);
- loading a further aircraft structural component (3b) from a further parking space (21b), which is arranged outside the working region (6) and in the loading region (7), onto the positioning apparatus (2), wherein the parking place (21a) and the further parking place (21b) are offset with respect to one another in the Y direction (13) and are arranged between the first tower rail (15a) and the second tower rail (15b);
- moving the second aircraft structural component (3b) by means of the positioning apparatus (2) into the working region (6), and
- processing the second aircraft structural component (3b) by means of the tool (5) arranged on the manipulator (4) .

11. Method according to Claim 10, **characterized in that**, while the aircraft structural component (3a) is being processed in the working region (6), simultaneous preprocessing of the further aircraft structural component (3b) occurs at the further parking place (21b).

## Revendications

1. Installation de traitement de composants de structure d'avion, ladite installation comprenant une station de traitement (1) qui comprend un dispositif de positionnement (2) destiné à recevoir et à déplacer un composant de structure d'avion (3a, b) et un manipulateur (4) muni d'un outil (5), de préférence une riveteuse (5a), le manipulateur (4) étant conçu pour déplacer l'outil (5), une zone de travail (6) de la station de traitement (1) étant définie par la zone dans laquelle le composant de structure d'avion (3a, b), reçu par le dispositif de positionnement (2), peut être traité par l'outil (5) et le dispositif de positionnement (2) comprenant deux tours de positionnement (9a, b) pourvues d'un support de composant (10), en particulier un cadre de serrage (10a), de préférence rectangulaire qui est disposé entre les tours de positionnement (9a, b) et qui est destiné à recevoir le composant de structure d'avion (3a, b), l'installation de traitement comprenant une zone de chargement (7) espacée de la zone de travail (6) et destinée au chargement et/ou déchargement du composant de structure d'avion (3a, b) et l'installation de traitement comprenant un dispositif de déplacement (8) qui est conçu pour déplacer un composant de structure d'avion (3a, b), reçu par le dispositif de positionnement (2), notamment entièrement, entre la zone de travail (6) et la zone de chargement (7),
la zone de chargement (7) étant disposée de manière décalée dans une direction, la direction Y (13), par rapport à la zone de travail (6), laquelle direction Y (13) est orientée sensiblement orthogonalement à la direction X (14) qui s'étend entre les tours de positionnement (9a, b),
le dispositif de déplacement (8) comprenant un premier rail de tour (15a) et un deuxième rail de tour (15b) qui sont conçus pour déplacer les tours de positionnement (9a, b) dans la direction Y (13) entre la zone de travail (6) et la zone de chargement (7), l'installation de traitement comprenant un dispositif de chargement (20a, b) qui est conçu pour déplacer le composant de structure d'avion (3a, b) du dispositif de positionnement (2) à un emplacement de stockage (21a, b) et/ou qui est conçu pour déplacer le composant de structure d'avion (3a, b) de l'emplacement de stockage (21a, b) au dispositif de positionnement (2) et l'emplacement de stockage (21a, b) étant disposé dans la zone de chargement (7) et la zone de chargement (7) comportant une autre zone de stockage (21b), l'emplacement de stockage (21a) et l'autre emplacement de stockage (21b) étant décalés l'un par rapport à l'autre dans la direction Y (13) et étant disposés entre le premier rail de tour (15a) et le deuxième rail de tour (15b).

2. Installation de traitement selon la revendication 1, **caractérisée en ce que** les tours de positionnement (9a, b) comportent chacune un dispositif de fixation (11a, b) destiné au support de composant (10), le dispositif de fixation respectif (11a, b) pouvant être déplacé dans le sens de la hauteur (12) sur la tour de positionnement respective (9a, b).

3. Installation de traitement selon la revendication 1 ou 2, **caractérisée en ce que** la zone de travail (6) et la zone de chargement (7) sont chacune disposées au moins partiellement entre le premier rail de tour (15a) et le deuxième rail de tour (15b).

4. Installation de traitement selon la revendication 3, **caractérisée en ce que** le manipulateur (4) comprend un bâti (4a) pourvu d'un support horizontal supérieur (16), lequel support horizontal supérieur (16) est disposé au moins partiellement au-dessus de la zone de travail (6), de préférence, le bâti (4a) étant un bâti en C (4b) pourvu d'une colonne (17) et d'un support horizontal inférieur (18), en particulier, l'installation de traitement comprenant des rails de bâti (19a, b) qui sont conçus pour déplacer le bâti en C (4b) dans la direction X (14).

5. Installation de traitement selon la revendication 4, **caractérisée en ce que** l'outil (5) est fixé au support horizontal supérieur (16).

6. Installation de traitement selon la revendication 4 ou 5, **caractérisée en ce que** les rails de bâti (19a, b) comprennent un premier rail de bâti (19a) et un deuxième rail de bâti (19b), le support horizontal inférieur (18) étant orienté dans la direction Y (13) et étant disposé aussi bien sur le premier rail de bâti (16a) que sur le deuxième rail de bâti (16b), le premier rail de bâti (19a) s'étendant, de préférence au centre, dans la direction X (14) à travers la zone de travail (6) et le deuxième rail de bâti (19b) s'étendant à distance de la zone de travail (6).

7. Installation de traitement selon l'une des revendications 1 à 6, **caractérisée en ce que** le dispositif de chargement (20a, b) comprend une grue (22) .

8. Installation de traitement selon l'une des revendications 1 à 7, **caractérisée en ce que** le dispositif de chargement (20b) comprend des moyens de verrouillage commandables (23) sur le dispositif de positionnement (2), notamment sur le cadre de serrage (10a) .

9. Installation de traitement selon l'une des revendications 1 à 8, **caractérisée en ce que** l'emplacement de stockage (21a, b) comporte des moyens de fixation (24) destinés à recevoir le composant de structure d'avion (3a, b) et/ou **en ce que** l'emplacement de stockage (21a, b) est conçu pour effectuer le post-traitement ou le prétraitement du composant de structure d'avion (3a, b).

10. Procédé de traitement de composants de structure d'avion, ledit procédé comprenant les étapes suivantes :
- traiter un composant de structure d'avion (3a), reçu par un dispositif de positionnement (2), dans une zone de travail (6) au moyen d'un outil (5) disposé sur un manipulateur (4),
le dispositif de positionnement (2) comprenant deux tours de positionnement (9a, b) pourvues d'un support de composant (10), notamment un cadre de serrage (10a), de préférence rectangulaire qui est disposé entre les tours de positionnement (9a, b) et qui est destiné à recevoir le composant de structure d'avion (3a, b), un premier rail de tour (15a) et un deuxième rail de tour (15b) étant prévus pour déplacer les tours de positionnement (9a, b) dans une direction Y (13) entre la zone de travail (6) et une zone de chargement (7),
la zone de chargement (7) étant disposée de manière décalée dans la direction Y (13) par rapport à la zone de travail (6), laquelle direction Y (13) est orientée sensiblement orthogonalement à la direction X (14) s'étendant entre les tours de positionnement (9a, b),
le procédé comprenant en outre les étapes suivantes :
- déplacer le composant de structure d'avion (3a) au moyen du dispositif de positionnement (2) de la zone de travail (6) jusque dans la zone de chargement (7) espacée de la zone de travail (6) ;
- décharger le composant de structure d'avion (3a) du dispositif de positionnement (2) jusque sur un emplacement de stockage (21a) qui est disposé à l'extérieur de la zone de travail (6) et dans la zone de chargement (7) ;
- charger un autre composant de structure d'avion (3b) d'un autre emplacement de stockage (21b), qui est disposé à l'extérieur de la zone de travail (6) et dans la zone de chargement (7), jusque sur le dispositif de positionnement (2), l'emplacement de stockage (21a) et l'autre emplacement de stockage (21b) étant décalés l'un par rapport à l'autre dans la direction Y (13) et étant disposés entre le premier rail de tour (15a) et le deuxième rail de tour (15b) ;
- déplacer le deuxième composant de structure d'avion (3b) au moyen du dispositif de positionnement (2) jusque dans la zone de travail (6) et
- traiter le deuxième composant de structure d'avion (3b) au moyen de l'outil (5) disposé sur le manipulateur (4).

11. Procédé selon la revendication 10, **caractérisé en ce que**, pendant le traitement du composant de structure d'avion (3a) dans la zone de travail (6), l'autre composant de structure d'avion (3b) est prétraité simultanément sur l'autre emplacement de stockage (21b) .
